# EUROPEAN PATENT SPECIFICATION

(11) **EP 2 854 446 B1**
(45) Date of publication and mention of the grant of the patent: **25.04.2018**
(21) Application number: 12880241.0
(22) Date of filing: 27.06.2012
(51) Int. Cl.: H04L 12/911, H04W 28/16, H04L 1/18, H04L 12/825, H04W 28/06

(54) **ACCESS CONTROL METHOD AND DEVICE**
ZUGANGSSTEUERUNGSVERFAHREN UND -VORRICHTUNG
PROCÉDÉ ET DISPOSITIF DE CONTRÔLE D'ACCÈS

(43) Date of publication of application: 01.04.2015
(73) Proprietor: Huawei Technologies Co., Ltd., Longgang District Shenzhen, Guangdong 518129 (CN)
(72) Inventor: ZOU, Chenggang, Shenzhen Guangdong 518129 (CN); WANG, Guanghui, Shenzhen Guangdong 518129 (CN); ZHU, Jiajun, Shenzhen Guangdong 518129 (CN)
(74) Representative: Gill Jennings & Every LLP
(86) International application number: PCT/CN2012/077647
(87) International publication number: WO 2014/000186

(56) References cited:
- EP-A2- 1 209 942
- EP-A2- 1 809 064
- CN-A- 1 761 351
- CN-A- 1 798 086
- CN-A- 1 842 024
- CN-A- 1 852 548
- CN-A- 101 626 598
- GB-A- 2 483 103
- US-A1- 2007 177 541
- US-A1- 2009 022 101
- US-A1- 2010 046 375

## Description

### TECHNICAL FIELD

Embodiments of the present invention relate to communications technologies, and in particular, to an admission control method and device.

### BACKGROUND

For a wireless communications system, resource management is classified into: resource management of air interface resources and transmission resource management of transmission resources. Currently, transmission resource management is mainly classified into: control plane-based transmission resource management and user plane-based transmission resource management.

Control plane-based transmission resource management, also known as transmission load control, is used to manage transmission bandwidth, control load of a transmission link, access user terminals as many as possible on condition that quality of service is ensured, and improve a system capacity. Admission load control reserves bandwidth for each service. Transmission load is the sum of reserved bandwidth of all accessed services. Admission control is performed on a service based on a congestion state of transmission load.

Transmission load processing based on reserved bandwidth includes: configuring, by a user terminal, bandwidth of a transmission path and corresponding bandwidth of each level (an Internet Protocol path (Internet Protocol Path, IP PATH for short), a logical port, and a physical port).

When a new user terminal service is accessed, transmission load control performs admission control based on reserved bandwidth: if "total transmission load of currently accessed users" + "reserved bandwidth of a newly accessed user" < "configured bandwidth congestion threshold", admission of the service is allowed; and if "total transmission load of currently accessed users" + "reserved bandwidth of a newly accessed user" is greater than or equal to "configured bandwidth congestion threshold", a load reshuffling (Load Reshuffling, LDR for short) action (for example, PS downspeeding, switching from a full rate encoding manner to a half rate encoding manner, preferentially selecting half rate encoding, or adaptive multi rate control (Adaptive Multi Rate Control, AMRC for short)) is performed according to a congestion degree.

Currently, transmission load admission control is performed based on a method of multiplying reserved bandwidth by an activity factor. However, due to complexity of application scenarios of an existing network, an admission algorithm based on reserved bandwidth multiplied by an activity factor cannot well adapt to various networking scenarios. For example, the activity factor fluctuates in different environments, and therefore use of a configured fixed value cannot adapt to a dynamic change of an application environment, which causes a deviation inevitably. In addition, if selecting automatic adjustment of the activity factor, the automatic adjustment of the activity factor is infeasible in implementation due to complexity in implementation and a constant change. Therefore, current admission control based on reserved bandwidth may lead to an under-admission problem and an over-admission problem. Further, multi-level admission control based on reserved bandwidth indirectly prolongs duration of access of a user terminal and increases an overhead of central processing unit (Central Processing Unit, CPU for short) resources of a system.

GB 2483103 A describes a controller that supports multiple radio access technologies.

US 2009/0022101 A1 describes determining a bandwidth allocation period for data transmission based on the number of mobile stations within a cell.

### SUMMARY

In view of this, with respect to drawbacks in the prior art, embodiments of the present invention provide an admission control method and device, to solve under-admission and over-admission problems caused by inaccurate admission in the prior art and also reduce duration of access of a user terminal.

According to one aspect, an admission control method provided by an embodiment of the present invention includes:
receiving, by a service control module after a core network element receives a service request initiated by a terminal and including a service type, a service establishment assignment request delivered according to the service type; and
if determining that a current service corresponding to the service type is in a congestion backpressure state but preset duration is not exceeded, applying for, by the service control module, a transmission resource from a transmission resource allocating module according to the service establishment assignment request, and interacting with the core network element and a base station to establish a transmission path for the service request of the terminal. For example, acquired transmission resource information is exchanged with the core network element and the base station based on a 3GPP standard-based message to, for a Global System for Mobile Communications (Global System for Mobile Communications, GSM for short), complete establishment of a service transmission path of A, Gb and Abis interfaces, and for a Universal Mobile Telecommunications System (Universal Mobile Telecommunications System, UMTS for short), complete establishment of a service transmission path of lu-CS, lu-PS, and lub interfaces.

According to a second aspect, a service control module provided by an embodiment of the present invention includes:
a receiving unit, configured to receive, after a core network element receives a service request initiated by a terminal and including a service type, a service establishment assignment request delivered by the core network element according to the service type;
a determining unit, configured to determine that a current service corresponding to the service type is in a congestion backpressure state but preset duration is not exceeded; and
a transmission path establishing unit, configured to, in response to the determining, apply for a transmission resource from a transmission resource allocating module according to the service establishment assignment request, and interact with the core network element and a base station to establish a transmission path for the service request of the terminal.

It can be seen from the foregoing technical solutions that, in the admission control method and device of the embodiments of the present invention, after receiving a service establishment assignment request delivered by a core network element according to a service type, a service control module determines whether a current service corresponding to the service type is in a congestion backpressure state; and if determining that the current service corresponding to the service type is in the congestion backpressure state but preset duration is not exceeded, applies for a transmission resource from a transmission resource allocating module. The foregoing method solves under-admission and over-admission problems caused by inaccurate admission in the prior art and can make the best of a transmission resource, thereby further eliminating multi-level control plane admission management, shortening duration of access of a user terminal, and solving a series of problems caused by inaccurate control plane admission.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1A and FIG. 1B are schematic hierarchy diagrams of an IP PATH, a logical port, and a physical port according to the present invention;
FIG. 2A is a schematic structural diagram of a base station controller according to an embodiment of the present invention;
FIG. 2B is a schematic flowchart of an admission control method according to an embodiment of the present invention;
FIG. 3 is a schematic flowchart of an admission control method according to another embodiment of the present invention;
FIG. 4 is a schematic flowchart of an admission control method according to another embodiment of the present invention;
FIG. 5A -1 and FIG. 5A -2 and FIG. 5B-1 and FIG. 5B-2 are signaling diagrams of an admission control method according to another embodiment of the present invention;

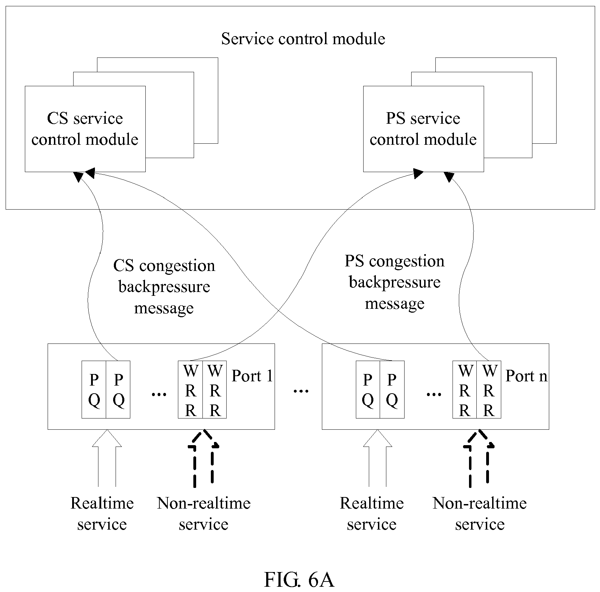

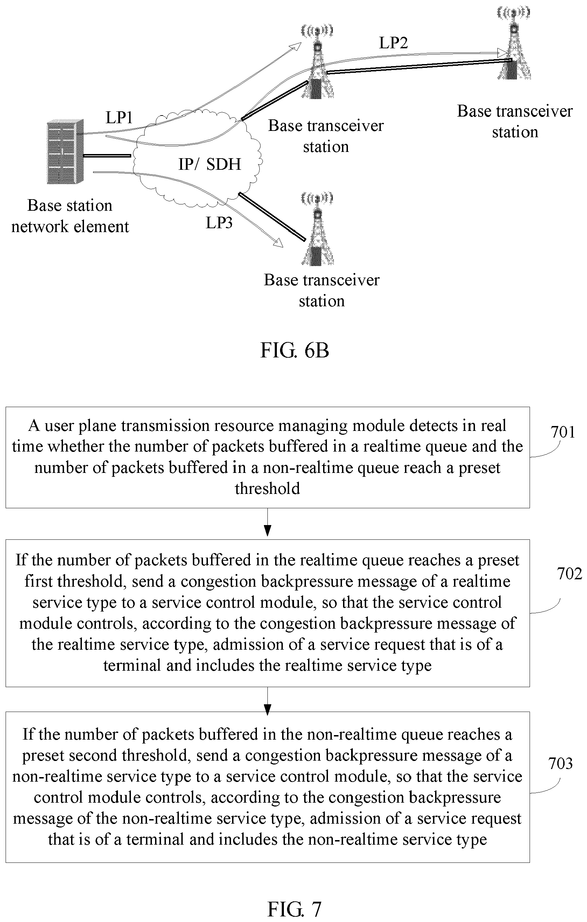

FIG. 6A and FIG. 6B are scenario diagrams of an admission control method according to another embodiment of the present invention;
FIG. 7 is a schematic flowchart of an admission control method according to an example;

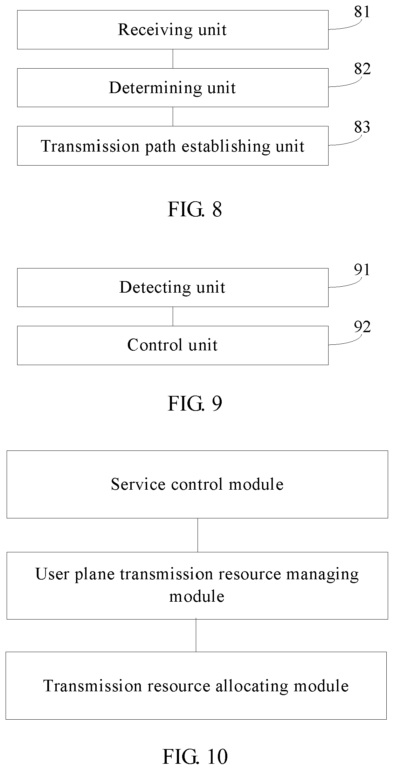

FIG. 8 is a schematic structural diagram of a service control module according to another embodiment of the present invention;
FIG. 9 is a schematic structural diagram of a user plane transmission resource managing module according to an example; and
FIG. 10 is a schematic structural diagram of a base station controller according to another embodiment of the present invention.

### DESCRIPTION OF EMBODIMENTS

To make the objectives, technical solutions, and advantages of the present invention clearer, the following clearly and completely describes the technical solutions of the present invention with reference to the accompanying drawings in the embodiments of the present invention. Apparently, the described embodiments are a part of the embodiments of the present invention. Based on the embodiments of the present invention, persons of ordinary skill in the art can obtain other embodiments which can solve the technical problem of the present invention and implement the technical effect of the present invention by equivalently altering a part of or all the technical features even without creative efforts. Apparently, the embodiments obtained through alteration do not depart from the scope disclosed in the present invention.

Currently, by using an Internet Protocol (Internet Protocol, IP for short) technology that is characterized by simplicity, flexibility and low costs, an IP-based wireless mobile network gradually becomes a trend of a telecommunications network and is increasingly widely applied, and an IP-based wireless network can effectively decrease end-to-end unit bit (bit) costs. An IP-based wireless network includes an IP-based network element device of a wireless network and an IP-based transmission bearer network of a wireless network. After a network element device and a bearer network device become IP-based, due to characteristics of IP packet grouping and multiplexing, compared with a time division multiplexing (Time Division Multiplexing, TDM for short) manner in which a transmission link is fixedly allocated (a transmission timeslot resource is exclusive in time division mode, that is, a transmission link is exclusively used), an IP manner in which bandwidth is shared between transmission links has higher transmission efficiency but requires admission control over a service to avoid network transmission overload.

Currently, in a wireless communications system (GSM/UMTS/CDMA/TDCDMA/LTE), a bottleneck may exist in both air interface wireless resources and transmission link resources for bearing a service. Therefore, to ensure quality of service (Quality of Service, QoS for short) experience of a user, resource management is performed on all accessed services.

For a wireless communications system, resource management is classified into two types: resource management based on air interface resources and transmission resource management based on transmission resources. For establishment of a new service, the service can be finally and successfully accessed and a user conversation or a data service can be finally established only when the two types of resource management are successfully admitted.

Currently, transmission resource management is mainly classified into two aspects: control plane-based transmission resource management and user plane-based transmission resource management.

Control plane-based transmission resource management is intended to manage transmission resources according to a rational bandwidth allocation policy in a transmission admission procedure. A problem that a control plane transmission resource management algorithm needs to solve is how to efficiently and precisely admit more users, effectively avoid a packet loss due to congestion of actual user plane traffic, and ensure quality for a user. User plane-based transmission resource management is intended to control actual user plane traffic, solve a packet loss due to congestion of actual traffic, and ensure high-efficiency use of transmission bandwidth.

Control plane-based transmission resource management, also known as transmission load control, is used to manage transmission bandwidth, control load of a transmission link, access users as many as possible on condition that quality of service is ensured, and improve a system capacity. Admission load control reserves bandwidth for each service. Transmission load is the sum of reserved bandwidth of all accessed services. Admission control is performed on a service based on a congestion state of transmission load.

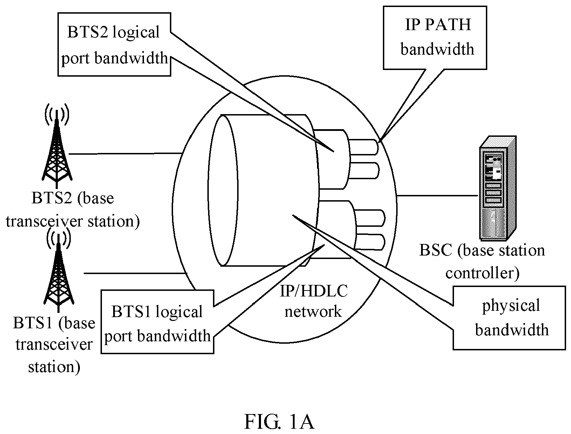

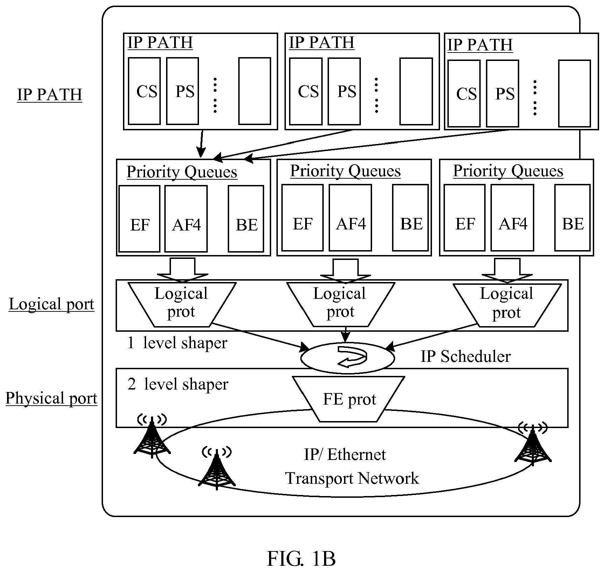

Current transmission load control uses an admission control algorithm based on reserved bandwidth, and multi-level admission control exists. For example, as shown in FIG. 1A and FIG. 1B, admission control is performed based on configured IP PATH (IP path) bandwidth, admission control is performed based on configured logical port (Logical port, LP for short) bandwidth, and admission control is performed based on configured physical port bandwidth. Access of a service is allowed at a transmission layer only when all admission control points on an entire admission path are admitted successfully. If any admission point fails to be admitted, access of the service is rejected.

In general, an IP PATH may be born on a logical port, and a logical port is born on a physical port. Multiple logical ports may be configured on one physical port, each logical port may correspond to one base station, and logical port bandwidth is equal to bottleneck bandwidth of a base station. An IP PATH corresponds to one or all service types of a base station and bandwidth of the IP PATH also corresponds to bandwidth planned for one or all service types of the base station.

In the prior art, corresponding transmission load exists in each level of multi-level admission control: an IP PATH level, a logical port level, and a physical port level. Admission control based on reserved bandwidth needs to be performed on each level. During service access or release, transmission load needs to be changed for each level. When transmission load TrmLoad (total transmission load that has been occupied, indicating a current use condition of a transmission resource, where an initial value is 0 and a unit is bps) corresponding to each level changes, comparison with a corresponding bandwidth threshold configured for each level needs to be performed.

If TrmLoad of any level >= configured bandwidth of the level * congestion threshold, it is regarded that the transmission link is currently congested and a service control management module is instructed to perform congestion management and trigger a load reshuffling (Load Reshuffling, LDR for short) action: selecting a low encoding rate, for example, packet service (Packet Service, PS for short) downspeeding, preferentially selecting half rate encoding for a circuit service (Circuit Service, CS for short), switching from full rate encoding to half rate encoding for a voice user, or AMRC, thereby relieving a congestion degree of the transmission link.

An admission control solution based on reserved bandwidth completes evaluation on an occupation condition of transmission bandwidth by collecting statistics of an occupation amount of predicted service bandwidth and requires that application for service bandwidth accurately reflect an actual use condition of the service bandwidth. However, it is actually difficult to predict CS service bandwidth and PS service bandwidth. If admission is performed according to a maximum bit rate (Maximum Bit Rate, MBR for short), a huge waste of bandwidth is caused; and if admission is performed according to a guaranteed bit rate (Guaranteed Bit Rate), a packet loss due to a transmission congestion may be caused during a service burst. In addition, an uncertainty exists between static configuration of an activity factor and an actual application scenario, burst performance of a PS service, and the like may also result in an inconsistency between reserved bandwidth and actual bandwidth.

When an under-admission problem or an over-admission problem occurs in an admission process, the problem may be generally eased by manually adjusting an activity factor, to make admitted bandwidth relatively closer to real bandwidth, but cannot be solved thoroughly. Even if after the activity factor is temporarily adjusted, a predicted transmission resource during current admission is relatively well matched with a resource actually required by a service, predicted bandwidth cannot follow a dynamic change of a service model, for example, multiplexing of a service packet, local switching, and application of a compression technology, so that an inaccurate admission problem is generated again, thereby failing to make the best of transmission efficiency.

A core disadvantage of an admission control algorithm based on predicted bandwidth is inaccurate admission, which is externally represented as an "under-admission" problem or an "over-admission" problem.

Under-admission problem: A transmission resource has insufficient bandwidth but transmission resource admission control regards that transmission is used up and rejects to access a new user, thereby causing a low call access success ratio of a user and a low transmission bandwidth utilization ratio.

Over-admission problem: Transmission resource bandwidth has been used up but transmission resource admission control regards that transmission is still sufficient and continually accesses a new user, thereby constantly intensifying transmission congestion, losing lots of user data packets, and causing very poor user experience. That is, transmission efficiency is used in an out-of-specification manner.

User plane-based transmission resource management is also known as user plane backpressure, that is, user plane-based transmission resource management is based on traffic actually sent by a logical port or a physical port on a user plane. If buffered data packets exceed a congestion threshold of a queue corresponding to a logical port or a physical port because actual packet traffic is sent in an out-of-specification manner or is burst within a short time, a port corresponding to the queue directly sends a message to notify a service source, and the service source performs traffic control and reduces a sending rate of a service, thereby quickly relieving a congestion state of the user plane and avoiding very poor user experience due to a packet loss caused by long-time persistent congestion.

User plane backpressure is based on queue scheduling. After being IP-based, each port matches a group of queues. Both a physical port and a logical port have a corresponding group of queues. Queue scheduling is available for each group of queues. Queue scheduling aims to meet a transmission QoS need for different services and a differential service need. In general, a provided queue scheduling technology includes: priority queue (Priority Queue, PQ for short) and weighted round robin (Weighted Round Robin, WRR for short).

In each group of queues, PQ scheduling is used for several queues with a highest priority and WRR scheduling is used for queues except PQ queues. That is, a PQ+WRR scheduling manner is used. A realtime service and signaling are mapped to a PQ queue, and a non-realtime service is mapped to a WRR queue.

Each queue has a congestion removal threshold, a congestion threshold, and a packet loss threshold, which increase in sequence. A backpressure message is triggered to enter a congestion backpressure state once the number of packets buffered in a queue is greater than a congestion threshold of the queue, and a congestion removal state is entered once the number of packets buffered in the queue is less than a congestion removal threshold. When a packet loss threshold is exceeded, a packet loss starts and a congestion backpressure message is triggered.

Because a PS data service is of strong burst performance and fluctuation, and a CS voice service is of very weak burst performance, only backpressure for a PS data service is generally considered, that is, when a user plane port is congested, only a PS service processing module is instructed to perform downspeeding on a PS service.

Current user plane backpressure can only solve a scenario dominated by a PS data service. For a scenario with limited bandwidth and dominated by a CS voice, for example, a scenario in which bottleneck bandwidth of a port has only one or several E1s (cables), over-admission is caused due to inaccurate control plane admission based on reserved bandwidth. In this case, even if a port is congested (lots of congestion or packet losses occur in a PQ queue and a backpressure message is generated), a PS service processing module is notified of the backpressure message and downspeeding is performed on the backpressure message, which, however, provides no help in removing CS user plane congestion, thereby causing long-time persistent user plane congestion and lots of packet losses. As a result, conversation quality of a CS user is very poor, and user perception and experience are seriously affected.

The admission control method of the embodiment of the present invention is used to cancel control plane admission based on reserved bandwidth, solve a problem of inaccurate control plane admission and user plane backpressure invalidation in partial scenarios, avoid manual adjustment of an activity factor, and simplify an operation and maintenance operation of a network at the same time.

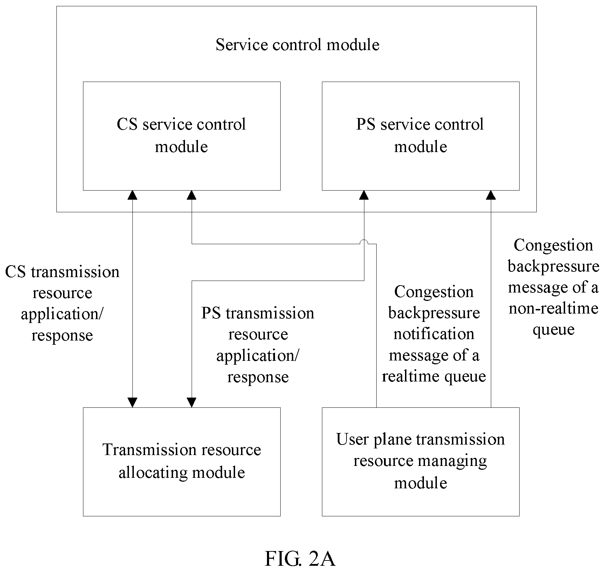

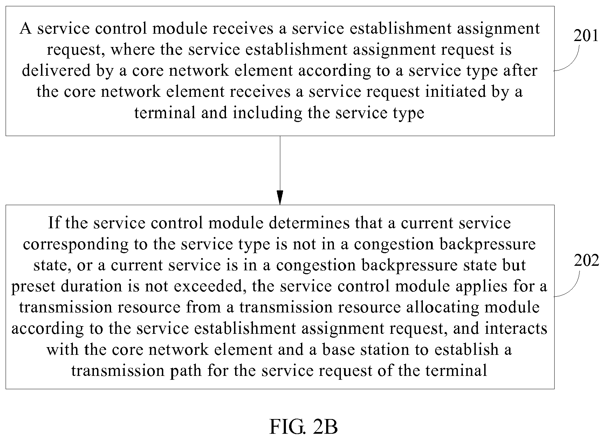

With reference to FIG. 2A and FIG. 2B, FIG. 2A is a scenario diagram of an admission control method according to an embodiment of the present invention, and FIG. 2B is a schematic flowchart of an admission control method according to an embodiment of the present invention.

201: A service control module receives a service establishment assignment request, where the service establishment assignment request is delivered by a core network element according to a service type after the core network element receives a service request initiated by a terminal and including the service type.

In this embodiment, the core network element may receive a service request that is sent by a terminal, includes a service type, and is transparently transmitted by a base station, may receive a service request that is of the terminal, includes a service type, and is forwarded by another core network element, or the like. This embodiment does not limit a process for receiving a service request of a terminal by a core network element. In addition, a service request sent by each terminal includes a service type.

For example, a service type may be a circuit service (Circuit Service, CS for short) type or a packet service (Packet Service, PS for short) type.

In general, a service type is classified into a realtime service type and a non-realtime service type. A CS voice service type belongs to a realtime service type and a PS data service type belongs to a non-realtime service type.

When a service type is a CS voice service type, a queue corresponding to the CS voice service type is a realtime queue; and when a service type is another realtime service type, for example, a video service and a realtime interactive service, a queue corresponding to the realtime service type is also a realtime queue.

When a service type is a PS data service type, a queue corresponding to the PS data service type is a non-realtime queue; and further, when a service type is another non-realtime service type, a queue corresponding to the non-realtime service type is also a non-realtime queue.

202: If determining that a current service corresponding to the service type is not in a congestion backpressure state, or a current service is in a congestion backpressure state but preset duration is not exceeded, the service control module applies for a transmission resource from a transmission resource allocating module according to the service establishment assignment request, and interacts with the core network element and a base station to establish a transmission path for the service request of the terminal.

For example, the service control module applies for the transmission resource from the transmission resource allocating module according to the service establishment assignment request, and exchanges acquired transmission resource information with the core network element and the base station based on a 3GPP standard-based message to, for a Global System for Mobile Communications (Global System for Mobile Communications, GSM for short), complete establishment of a service transmission path of A, Gb and Abis interfaces, and for a Universal Mobile Telecommunications System (Universal Mobile Telecommunications System, UMTS for short), complete establishment of a service transmission path of lu-CS, lu-PS, and lub interfaces.

For example, the core network element may be: a media gateway (Media GateWay, MGW for short), a serving GPRS support node (Serving GPRS support node, SGSN for short), or the like; and the base station may be a base transceiver station (Base Transceiver Station, BTS for short), a NodeB (3G base station), or the like. It should be understood that the interaction between the service control module, the core network element, and the base station to finally establish a transmission path for a terminal service is the prior art and is just described as an example in this embodiment. This embodiment poses no limitation thereto and conforms to actual interaction.

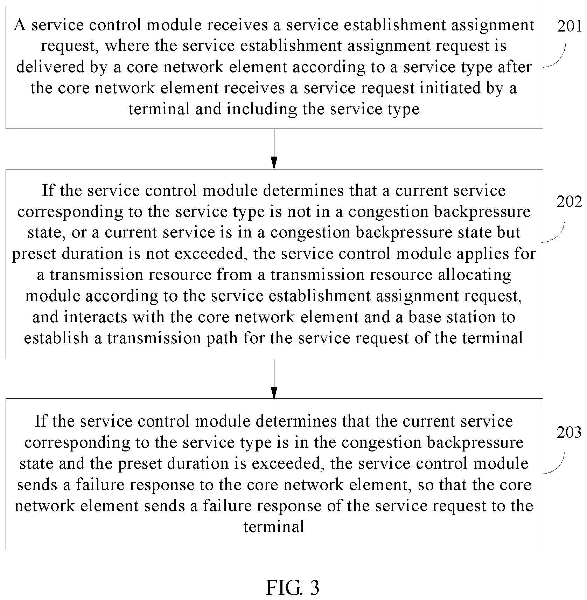

Further, as shown in FIG. 3, the admission control method further includes the following step 203.

203: If determining that the current service corresponding to the service type is in the congestion backpressure state and the preset duration is exceeded, the service control module sends a failure response to the core network element, so that the core network element sends a failure response of the service request to the terminal.

It can be seen from the foregoing embodiment that, in the admission control method of the embodiment of the present invention, after receiving a service establishment assignment request delivered by a core network element according to a service type, a service control module determines whether a current service corresponding to the service type is in a congestion backpressure state; and if determining that the current service corresponding to the service type is not in the backpressure state, or the current service is in the congestion backpressure state but preset duration is not exceeded, applies for a transmission resource from a transmission resource allocating module. The foregoing method solves under-admission and over-admission problems caused by inaccurate admission in the prior art and can make the best of a transmission resource, thereby further eliminating multi-level control plane admission management, shortening duration of access of a terminal, and solving a series of problems caused by inaccurate control plane admission.

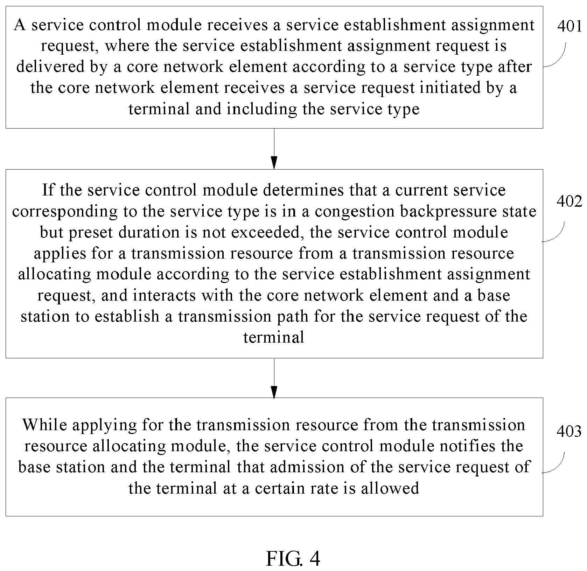

As shown in FIG. 4, FIG. 4 is a schematic flowchart of an admission control method according to an embodiment of the present invention. The admission control method in this embodiment is described as follows:
401: A service control module receives a service establishment assignment request, where the service establishment assignment request is delivered by a core network element according to a service type after the core network element receives a service request initiated by a terminal and including the service type.
402: If determining that a current service corresponding to the service type is in a congestion backpressure state but preset duration is not exceeded, the service control module applies for a transmission resource from a transmission resource allocating module according to the service establishment assignment request, and interacts with the core network element and a base station to establish a transmission path for the service request of the terminal.
403: While applying for the transmission resource from the transmission resource allocating module, the service control module notifies the base station and the terminal that admission of the service request of the terminal at a certain rate is allowed.

For example, when the service type is a CS voice service type and its corresponding realtime queue is congested, the service control module may notify the base station and the terminal, and require decreasing an encoding rate of a voice service request of the terminal. For example, full rate voice encoding is converted into half rate voice encoding for access, or a low-rate AMRC encoding manner is selected for access.

Correspondingly, when the service type is a PS data service type and its corresponding non-realtime queue is congested, the service control module may access a new service request corresponding to the PS data service type at a basic rate, for example, 64K bits/second in an uplink direction and 64K bits/second in a downlink direction; and also adjust an encoding rate of an accessed PS user, for example, adjust a PS encoding rate of a UMTS from 64K bits/second in an uplink direction and 384K bits/second in a downlink direction to 64K bits/second in the uplink direction and 64K bits/second in the downlink direction.

It can be seen from the foregoing embodiment that the admission control method of this embodiment can solve under-admission and over-admission problems caused by inaccurate admission in the prior art, thereby further eliminating multi-level control plane admission management, shortening duration of access of a terminal, and solving a series of problems caused by inaccurate control plane admission.

Certainly, in an actual application, that "the service control module determines that a current service corresponding to the service type is not in a congestion backpressure state" in the foregoing step 202 may be specifically:
202': The service control module determines that a congestion backpressure message sent by a user plane transmission resource managing module according to a congestion state of a detected queue corresponding to the service type is not received within a certain time, and further determines that the current service corresponding to the service type is not in the congestion backpressure state;
   or
   after determining that a congestion backpressure message sent by a user plane transmission resource managing module according to a congestion state of a detected queue corresponding to the service type is received, the service control module further determines, if a congestion removal message sent by the user plane transmission resource managing module according to the congestion state of the detected queue corresponding to the service type is further received, that the current service corresponding to the service type is not in the congestion backpressure state.

In an actual application, a user plane transmission resource managing module detects in real time the number of packets buffered in a queue corresponding to a service type; and if the number of buffered packets exceeds a congestion threshold (for example, a first threshold corresponding to a realtime queue and a second threshold corresponding to a non-realtime queue), sends a congestion backpressure message to a service control module. In this case, an upper-layer service module (for example, the service control module) triggers an LDR action according to the congestion backpressure message, and a load reshuffling (Load Reshuffling LDR) control result of the upper-layer service module is embodied in the queue corresponding to the service type in the user plane transmission resource managing module, which reduces sent data packets, thereby decreasing the number of buffered packets, and the like.

If the user plane transmission resource managing module detects that the number of packets buffered in the queue corresponding to the service type is less than a congestion removal threshold, it is regarded that backpressure is removed and a congestion removal message is sent to the service control module.

It should be noted that, in the service control module, different service types correspond to different LDR actions. In addition, the congestion threshold and congestion removal threshold may be the same or may be different. In an actual application, a congestion removal threshold may be different from a congestion threshold.

In another embodiment, that "the service control module determines that a current service corresponding to the service type is in a congestion backpressure state but preset duration is not exceeded" in the foregoing step 202 may be specifically:
202': The service control module determines that a congestion backpressure message sent by a user plane transmission resource managing module according to a congestion state of a detected queue corresponding to the service type is received, and a time period between a time point when the service control module receives the service request and a time point when the congestion backpressure message is received is less than the preset duration; and further determines that the current service corresponding to the service type is in the congestion backpressure state but the preset duration is not exceeded.

In another embodiment, that "the service control module determines that the current service corresponding to the service type is in the congestion backpressure state and the preset duration is exceeded" in step 203 in the foregoing FIG. 3 may be specifically:
203': After determining that a congestion backpressure message sent by a user plane transmission resource managing module according to a congestion state of a detected queue corresponding to the service type is received, the service control module further determines, if a time period between a time point when the service control module receives the service request and a time point when the congestion backpressure message is received is greater than or equal to the preset duration; and
   a congestion removal message sent by the user plane transmission resource managing module according to the congestion state of the detected queue corresponding to the service type is not received within the preset duration, that the current service corresponding to the service type is in the congestion backpressure state and the preset duration is exceeded.

In an actual application, if a congestion backpressure message sent by a user plane transmission resource managing module according to a congestion state of a detected queue corresponding to a service type is persistently received within a certain period of time, it is determined that a current service corresponding to the service type is in a congestion backpressure state and a preset time is lasted.

It should be noted that, after the service control module receives the congestion backpressure message sent by the user plane transmission resource managing module according to a congestion state of a detected realtime queue, the service control module triggers an LDR action of the realtime queue to relieve the congestion state of the realtime queue.

For example, the LDR action that is of the realtime queue and triggered by the service control module may be: adjusting an encoding rate of an accessed voice user, switching from a full rate to a half rate or selecting a low-speed encoding manner for an accessed AMR voice user, or preferentially selecting, by a newly accessed user, a half rate or low-rate AMRC encoding manner for access.

Correspondingly, after the service control module receives the congestion backpressure message sent by the user plane transmission resource managing module according to a congestion state of a detected non-realtime queue, the service control module triggers an LDR action of the non-realtime queue to relieve the congestion state of the non-realtime queue.

For example, the LDR action that is of the non-realtime queue and triggered by the service control module may be: adjusting an encoding rate for an accessed PS user; reducing an encoding rate of a PS user for a UMTS network; reducing an encoding rate of a PDCH channel and prohibiting a rate increasing request of a PS user for a GSM network, or the like.

The LDR action of the realtime queue is different from the LDR action of the non-realtime queue.

The admission control method can solve under-admission and over-admission problems caused by inaccurate admission in the prior art and can then make the best of a transmission resource, thereby further eliminating multi-level control plane admission management, for example, transmission is no longer applied for from a control plane transmission resource managing module, shortening duration of access of a user, and solving a series of problems caused by inaccurate control plane admission.

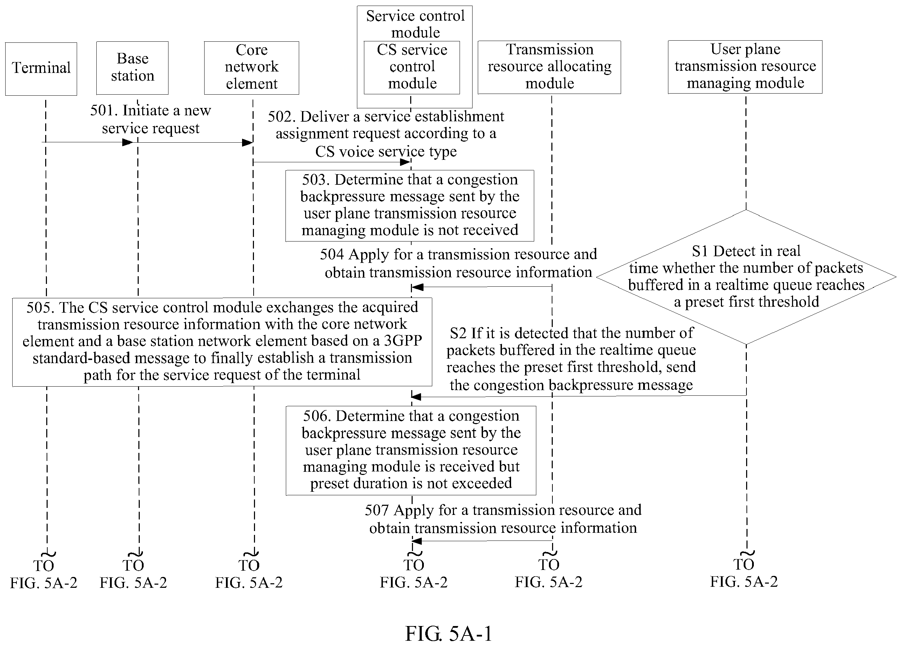

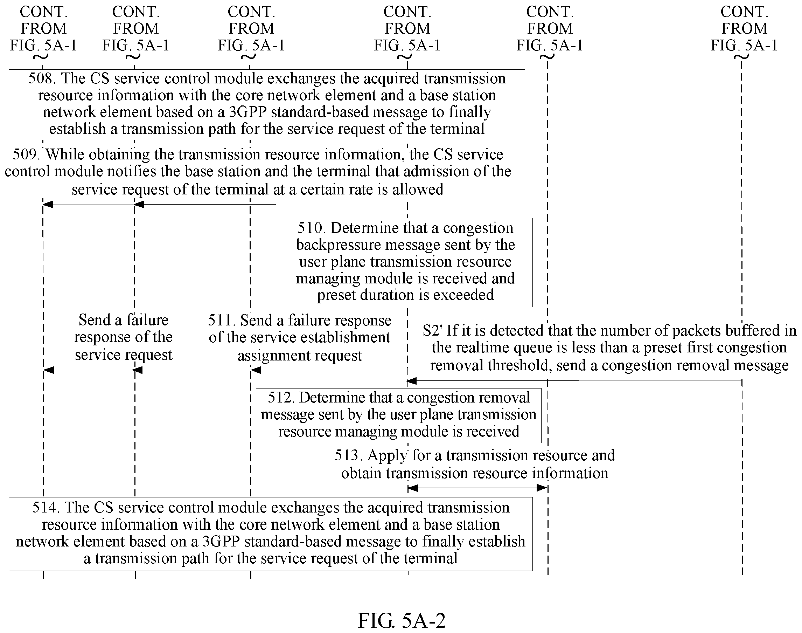

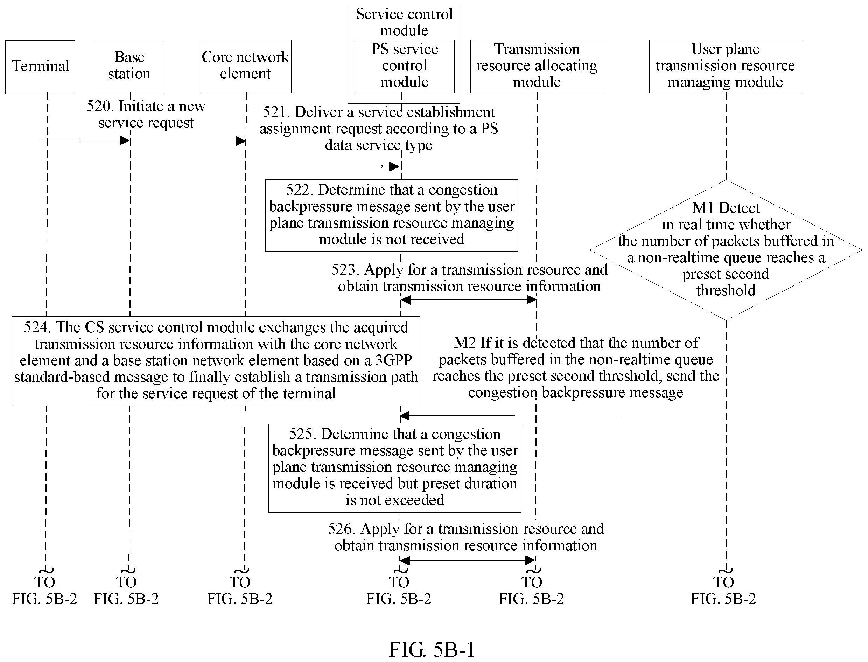

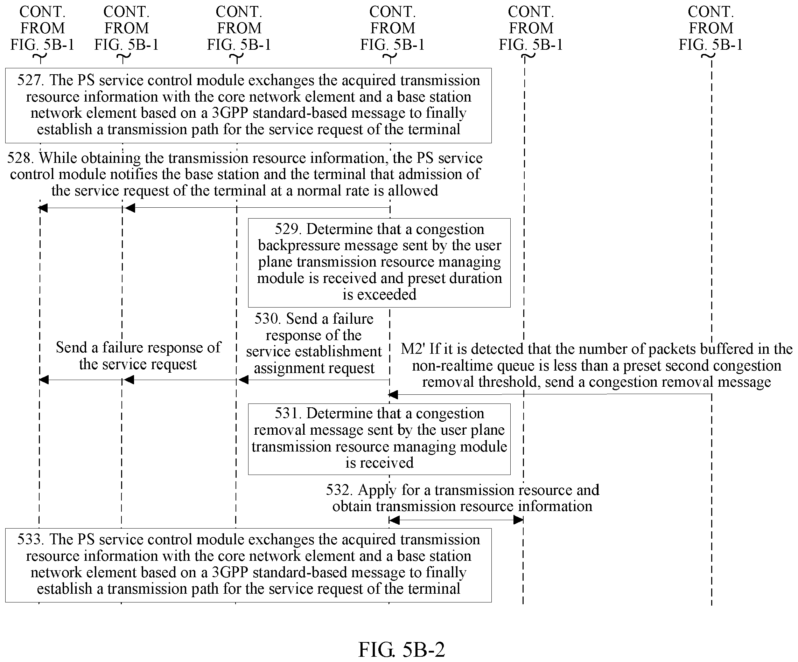

As shown in FIG. 5A, FIG. 5B, FIG. 6A, and FIG. 6B, FIG. 5A and FIG. 5B are signaling diagrams of an admission control method according to an embodiment of the present invention, and FIG. 6A and FIG. 6B are scenario diagrams of an admission control method of the present invention. The admission control method in this embodiment is described as follows:

As shown in FIG. 5A, the following step 501 to step 514 are used as examples to describe admission processes of a service request of a CS voice service type.

501: A core network element receives a service request transparently transmitted by a base station, where the service request is initiated by a terminal and the service request includes a CS voice service type.

502: The core network element delivers a service establishment assignment request to a CS service control module according to the CS voice service type.

503: The CS service control module determines that a congestion backpressure message sent by a user plane transmission resource managing module according to a congestion state of a detected realtime queue corresponding to the CS voice service type is not received.

504: The CS service control module applies for a transmission resource from a transmission resource allocating module and obtains transmission resource information.

505: The CS service control module exchanges the acquired transmission resource information with the core network element and a base station network element based on a 3GPP standard-based message to finally establish a transmission path for the service request of the terminal.

506: The CS service control module determines that a congestion backpressure message sent by a user plane transmission resource managing module according to a congestion state of a detected realtime queue corresponding to the CS voice service type is received but preset duration is not exceeded.

That is, S1: The user plane transmission resource managing module detects whether the number of packets buffered in the realtime queue reaches a preset first threshold.

S2: When the user plane transmission resource managing module detects that the number of packets buffered in the realtime queue reaches the preset first threshold, the user plane transmission resource managing module sends the congestion backpressure message of the CS voice service type to the CS service control module.

Further, the CS service control module may trigger an LDR action according to the received congestion backpressure message. An LDR control result of the CS service control module is embodied in the realtime queue in the user plane transmission resource managing module and used to remove the congestion state of the realtime queue.

507: The CS service control module applies for a transmission resource from a transmission resource allocating module and obtains transmission resource information.

508: The CS service control module exchanges the acquired transmission resource information with the core network element and a base station network element based on a 3GPP standard-based message to finally establish a transmission path for the service request of the terminal.

509: While obtaining the transmission resource information, the CS service control module notifies the base station and the terminal that admission of the service request of the terminal at a certain rate is allowed.

For example, that admission at a certain rate is allowed may further include: for a newly accessed service request, preferentially selecting a half rate encoding manner or a lowest-rate AMRC encoding manner for access.

In general, a service request includes a priority identifier and/or an emergency service identifier. Correspondingly, when determining that a current service is in a backpressure state, a service control module views a priority identifier and/or an emergency service identifier in a service request, and preferentially admits a service request with a high priority or a service request of an emergency service according to the priority identifier and/or the emergency service identifier in the service request.

It should be noted that the foregoing step 508 and step 509 are implemented together in an actual application and are described as two steps in this embodiment for ease of description. This embodiment does not limit an implementation order of the steps.

510: The CS service control module determines that a congestion backpressure message sent by a user plane transmission resource managing module according to a congestion state of a detected realtime queue corresponding to the CS voice service type is received and preset duration is exceeded.

If the CS service control module may trigger an LDR action according to the received congestion backpressure message but the congestion state of the realtime queue in the user plane transmission resource managing module is not removed, the user plane transmission resource managing module persistently sends the congestion backpressure message of the realtime queue to the CS service control module, for example, for 5 seconds, 3 seconds, or the like. Then the CS service control module determines that a current service corresponding to the CS voice service type is in the congestion backpressure state and lasting time exceeds the preset duration.

511: The CS service control module sends a failure response to the core network element, so that the core network element sends a failure response of the service request to the terminal.

In an actual application, when a current CS service control module regards that a current realtime queue has been congested for a long time, a processing effect that the CS service control module performs downspeeding on a service request corresponding to an accessed CS voice service type is not obvious, and the congestion is intensified if a new service request is continually accessed. In this case, admission of a new service request corresponding to the CS voice service type is rejected.

512: The CS service control module determines that a congestion removal message sent by a user plane transmission resource managing module according to a congestion state of a detected realtime queue corresponding to the CS voice service type is received.

If the CS service control module may trigger an LDR action according to the received congestion backpressure message, the congestion state of the realtime queue in the user plane transmission resource managing module is removed, that is:
S2': The user plane transmission resource managing module detects that the number of packets buffered in the realtime queue is less than a preset first congestion removal threshold, and further sends a congestion removal message of the realtime queue to the CS service control module.
513: The CS service control module applies for a transmission resource from a transmission resource allocating module and obtains transmission resource information.
514: The CS service control module exchanges the acquired transmission resource information with the core network element and a base station network element based on a 3GPP standard-based message to finally establish a transmission path for the service request of the terminal.

As shown in FIG. 5B, the following step 520 to step 533 are used as examples to describe admission processes of a service request of a PS data service type.

520: A core network element receives a service request transparently transmitted by a base station, where the service request is initiated by a terminal and the service request includes a PS data service type.

521: The core network element delivers a service establishment assignment request to a PS service control module according to the PS data service type.

522: The PS service control module determines that a congestion backpressure message sent by a user plane transmission resource managing module according to a congestion state of a detected non-realtime queue corresponding to the PS data service type is not received.

523: The PS service control module applies for a transmission resource from a transmission resource allocating module and obtains transmission resource information.

524: The PS service control module exchanges the acquired transmission resource information with the core network element and a base station network element based on a 3GPP standard-based message to finally establish a transmission path for the service request of the terminal.

525: The PS service control module determines that a congestion backpressure message sent by a user plane transmission resource managing module according to a congestion state of a detected non-realtime queue corresponding to the CS voice service type is received but preset duration is not exceeded.

That is, M1: The user plane transmission resource managing module detects whether the number of packets buffered in the non-realtime queue reaches a preset second threshold.

M2: When the user plane transmission resource managing module detects that the number of packets buffered in the non-realtime queue reaches the preset second threshold, the user plane transmission resource managing module sends the congestion backpressure message of the PS data service type to the PS service control module.

Further, the PS service control module may trigger an LDR action according to the received congestion backpressure message. An LDR control result of the PS service control module is embodied in the non-realtime queue in the user plane transmission resource managing module and used to remove the congestion state of the non-realtime queue.

526: The PS service control module applies for a transmission resource from a transmission resource allocating module and obtains transmission resource information.

527: The PS service control module exchanges the acquired transmission resource information with the core network element and a base station network element based on a 3GPP standard-based message to finally establish a transmission path for the service request of the terminal.

528: While obtaining the transmission resource information, the PS service control module notifies the base station and the terminal that admission of the service request of the terminal at a normal rate is allowed.

529: The PS service control module determines that a congestion backpressure message sent by a user plane transmission resource managing module according to a congestion state of a detected non-realtime queue corresponding to the PS data service type is received and preset duration is exceeded.

If the PS service control module may trigger an LDR action according to the received congestion backpressure message but the congestion state of the non-realtime queue in the user plane transmission resource managing module is not removed, the user plane transmission resource managing module persistently sends the congestion backpressure message of the non-realtime queue to the PS service control module, for example, for 5 seconds, 3 seconds, or the like. In this case, the PS service control module determines that a current service corresponding to the PS data service type is in the congestion backpressure state and lasting time exceeds the preset duration.

530: The PS service control module sends a failure response to the core network element, so that the core network element sends a failure response of the service request to the terminal.

In an actual application, when a current PS service control module regards that a current non-realtime queue has been congested for a long time, a processing effect that the PS service control module uses an encoding manner of reducing a PS service rate for a service request corresponding to an accessed PS data service type is not obvious, and the congestion is intensified if a new service request is continually accessed. In this case, admission of a new service request corresponding to the PS data service type is rejected.

531: The PS service control module determines that a congestion removal message sent by a user plane transmission resource managing module according to a congestion state of a detected non-realtime queue corresponding to the PS data service type is received.

If the PS service control module may trigger an LDR action according to the received congestion backpressure message, the congestion state of the non-realtime queue in the user plane transmission resource managing module is removed, that is:
M2': The user plane transmission resource managing module detects that the number of packets buffered in the non-realtime queue is less than a preset second congestion removal threshold, and further sends a congestion removal message of the non-realtime queue to the PS service control module.
532: The PS service control module applies for a transmission resource from a transmission resource allocating module and obtains transmission resource information.
533: The PS service control module exchanges the acquired transmission resource information with the core network element and a base station network element based on a 3GPP standard-based message to finally establish a transmission path for the service request of the terminal.

Certainly, the first threshold, the second threshold, the first congestion removal threshold, and the second congestion removal threshold are set according to an actual need, and this embodiment poses no limitation thereto.

The admission control method can solve under-admission and over-admission problems caused by inaccurate admission in the prior art and can make the best of a transmission resource, thereby further eliminating multi-level control plane admission management, for example, transmission is no longer applied for from a control plane transmission resource managing module, shortening duration of access of a user, and solving a series of problems caused by inaccurate control plane admission.

Congestion backpressure of a queue corresponding to the foregoing each service type only affects admission control over a service corresponding to the queue: during congestion backpressure of a realtime queue, an upper-layer service (for example, a CS service control module) performs congestion control on a realtime service; and during congestion backpressure of a non-realtime queue, an upper-layer service (for example, a PS service control module) performs congestion control on a non-realtime service, which makes the best of a transmission resource, improves transmission efficiency, ensures admission fairness between different services, solves a problem that user plane congestion backpressure is invalid in partial scenarios, avoids manual adjustment of an activity factor, reduces operation and maintenance costs of a network, and further shortens a user access delay.

As shown in FIG. 7, FIG. 7 is a schematic flowchart of an admission control method according to an example. The admission control method in this example is described as follows:
701: A user plane transmission resource managing module detects in real time whether the number of packets buffered in a realtime queue and the number of packets buffered in a non-realtime queue reach a preset threshold respectively.
702: If the number of packets buffered in the realtime queue reaches a preset first threshold, send a congestion backpressure message of a realtime service type to a service control module, so that the service control module controls, according to the congestion backpressure message of the realtime service type, admission of a service request that is of a terminal and includes the realtime service type.
703: If the number of packets buffered in the non-realtime queue reaches a preset second threshold, send a congestion backpressure message of a non-realtime service type to a service control module, so that the service control module controls, according to the congestion backpressure message of the non-realtime service type, admission of a service request that is of a terminal and includes the non-realtime service type.

Further, the admission control method further includes:
if the number of packets buffered in the realtime queue is less than a preset first congestion removal threshold, sending a congestion removal message of the realtime service type to the service control module, so that the service control module allows, according to the user removal message of the realtime service type, admission of the service request that is of the terminal and includes the realtime service type; and
correspondingly,
if the number of packets buffered in the non-realtime queue is less than a preset second congestion removal threshold, sending a congestion removal message of the non-realtime service type to the service control module, so that the service control module allows, according to the congestion removal message of the non-realtime service type, admission of the service request that is of the terminal and includes the non-realtime service type.

The admission control method in this example cancels control plane admission based on reserved bandwidth and performs admission control completely based on user plane congestion backpressure information. When a user plane does not trigger congestion backpressure, a service regards by default that each transmission resource is successfully admitted, thereby making the best of a transmission resource and improving transmission efficiency.

In another exemplary embodiment, a controller interface board provides an external interface, for example, a fast Ethernet (Fast Ethernet, FE for short) interface, a gigabit Ethernet (Gigabit Ethernet, GE for short) interface, a Point-to-Point Protocol (Point-to-Point Protocol, PPP for short) link, and a Multi-Link Point-to-Point Protocol (Multi-Link Point-to-Point Protocol, MLPPP for short) link, to implement receiving, sending, and forwarding processing of an external packet. A bottleneck also exists in system resources of the controller interface board in an actual application. When the system resources are used up, normal running of a service is also affected, and therefore a packet is discarded. To avoid constant happening of this influence, a congestion backpressure message needs to be triggered to instruct a service control module to perform congestion management. Therefore, a congestion threshold (for example, a third threshold) is also set for the system resources of the interface board. Likewise, a board detects a utilization ratio of internal resources in real time. If the utilization ratio of the resources of the board is greater than or equal to the preset third threshold, it is triggered to send a backpressure message to the service control module. In this case, because the board is a bottleneck of entire system resources, admission of all newly accessed services is rejected.

Specifically, when the internal resources (all queues received or sent inside the board) of the board are used up, the backpressure message is directly sent to the service control module. In this case, the service control module may perform an LDR action on each queue according to the backpressure message, for example, perform an LDR action on a realtime queue corresponding to a CS voice type and also perform an LDR action on a non-realtime queue corresponding to a PS data type, to remove congestion of the internal resources of the board.

Further, a third congestion removal threshold is set in the board. The board detects the utilization ratio of the internal resources in real time, and if the utilization ratio of the resources is less than a preset third congestion removal threshold, it is triggered to send a congestion removal message to the service control module, so that the service control module no longer performs the LDR action on each queue in the board and admits a service request of each terminal.

Specially, each port in the board has a group of queues, for example, a logical port, an Ethernet port, a PPP link, and an MLPPP link have a corresponding group of queues each. Each group of queues has both a realtime queue and a non-realtime queue. If the number of packets buffered in a non-realtime queue reaches a preset second threshold, a congestion backpressure message is sent to the service control module. In this case, the service control module controls a new service request corresponding to a PS data service type to be accessed at a basic rate and adjusts an encoding rate of an accessed PS user to relieve congestion of the non-realtime queue. Correspondingly, if the number of packets buffered in a realtime queue reaches a preset first threshold, a congestion backpressure message corresponding to the realtime queue is sent to the service control module. In this case, the service control module controls a new service request corresponding to a CS voice service type to be accessed by preferentially selecting a half rate encoding manner or a lowest-rate AMRC encoding manner for access.

According to another aspect of the present invention, the present invention further provides a service control module. As shown in FIG. 8, the service control module includes: a receiving unit 81, a determining unit 82, and a transmission path establishing unit 83.

The receiving unit 81 is configured to receive, after a core network element receives a service request initiated by a terminal and including a service type, a service establishment assignment request delivered according to the service type.

The determining unit 82 is configured to determine that a current service corresponding to the service type is not in a congestion backpressure state, or the current service is in a congestion backpressure state but preset duration is not exceeded.

The transmission path establishing unit 83 is configured to apply for a transmission resource from a transmission resource allocating module according to the service establishment assignment request, and interact with the core network element and a base station to establish a transmission path for the service request of the terminal.

Further, the determining unit 82 is further configured to determine that the current service corresponding to the service type is in the congestion backpressure state and the preset duration is exceeded.

Correspondingly, the transmission path establishing unit 83 is further configured to send a failure response to the core network element, so that the core network element sends a failure response of the service request to the terminal.

Preferably, when the determining unit 82 determines that the current service corresponding to the service type is in the congestion backpressure state but the preset duration is not exceeded, the transmission path establishing unit is further configured to notify the base station and the terminal that admission of the service request of the terminal at a certain rate is allowed.

In an actual application, the determining unit 82 is specifically configured to: if it is determined that a congestion backpressure message sent by a user plane transmission resource managing module according to a congestion state of a detected queue corresponding to the service type is not received, determine that the current service corresponding to the service type is not in the congestion backpressure state; or
if it is determined that a congestion removal message sent by a user plane transmission resource managing module according to a congestion state of a detected queue corresponding to the service type is received, determine that the current service corresponding to the service type is not in the congestion backpressure state.

Further, the determining unit 82 is further configured to: if it is determined that a congestion backpressure message sent by a user plane transmission resource managing module according to a congestion state of a detected queue corresponding to the service type is received, and a time period between a time point when the service control module receives the service request and a time point when the congestion backpressure message is received is less than the preset duration, determine that the current service corresponding to the service type is in the congestion backpressure state but the preset duration is not exceeded.

The determining unit 82 is specifically configured to: after it is determined that a congestion backpressure message sent by a user plane transmission resource managing module according to a congestion state of a detected queue corresponding to the service type is received, and if a time period between a time point when the service control module receives the service request and a time point when the congestion backpressure message is received is greater than or equal to the preset duration; and
a congestion removal message sent by the user plane transmission resource managing module according to the congestion state of the detected queue corresponding to the service type is not received within the preset duration, determine that the current service corresponding to the service type is in the congestion backpressure state and the preset duration is exceeded.

The service type is a realtime service type and a queue corresponding to the realtime service type is a realtime queue; or
the service type is a non-realtime service type and a queue corresponding to the non-realtime service type is a non-realtime queue.

It can be seen from the foregoing embodiment that, in the service control module of this embodiment, after a receiving unit receives a service establishment assignment request delivered by a core network element according to a service type, a determining unit determines whether a current service corresponding to the service type is in a congestion backpressure state; and if it is determined that the current service corresponding to the service type is not in the backpressure state, or the current service is in the congestion backpressure state but preset duration is not exceeded, a transmission path establishing unit applies for a transmission resource from a transmission resource allocating module. The foregoing method solves under-admission and over-admission problems caused by inaccurate admission in the prior art and can make the best of a transmission resource, thereby further eliminating multi-level control plane admission management, shortening duration of access of a terminal, and solving a series of problems caused by inaccurate control plane admission.

According to another example, there is provided a user plane transmission resource managing module. As shown in FIG. 9, the user plane transmission resource managing module of this example includes: a detecting unit 91 and a control unit 92.

The detecting unit 91 is configured to detect in real time whether the number of packets buffered in a realtime queue and the number of packets buffered in a non-realtime queue reach a preset threshold respectively.

The control unit 92 is configured to: when the number of packets buffered in the realtime queue reaches a preset first threshold, send a congestion backpressure message of a realtime service type to a service control module, so that the service control module controls, according to the congestion backpressure message of the realtime service type, admission of a service request that is of a terminal and includes the realtime service type; and
when the number of packets buffered in the non-realtime queue reaches a preset second threshold, send a congestion backpressure message of a non-realtime service type to a service control module, so that the service control module controls, according to the congestion backpressure message of the non-realtime service type, admission of a service request that is of a terminal and includes the non-realtime service type.

Further, the control unit 92 is further configured to: when the number of packets buffered in the realtime queue is less than a preset first congestion removal threshold, send a congestion removal message of the realtime service type to the service control module, so that the service control module allows, according to the user removal message of the realtime service type, admission of the service request that is of the terminal and includes the realtime service type; and
when the number of packets buffered in the non-realtime queue is less than a preset second congestion removal threshold, send a congestion removal message of the non-realtime service type to the service control module, so that the service control module allows, according to the congestion removal message of the non-realtime service type, admission of the service request that is of the terminal and includes the non-realtime service type.

The user plane transmission resource managing module in this example performs admission control by using a detecting unit and a control unit according to user plane congestion backpressure information. When a user plane does not trigger congestion backpressure, a service regards by default that each transmission resource is successfully admitted, thereby making the best of a transmission resource and improving transmission efficiency.

According to another aspect of the present invention, an embodiment of the present invention further provides a device, including the service control module described in any embodiment of the present invention and the user plane transmission resource managing module described in any embodiment of the present invention, where the service control module interacts with the user plane transmission resource managing module. For example, the foregoing device may be a base station controller, a core network element, or the like.

FIG. 10 is a schematic flowchart of a base station controller according to an embodiment of the present invention. As shown in FIG. 10, the base station controller includes: the service control module described in any embodiment of the present invention, the user plane transmission resource managing module described in any embodiment of the present invention, and a transmission resource allocating module.

The service control module interacts with the user plane transmission resource managing module and the transmission resource allocating module to establish a transmission path for a service request of a terminal.

It should be noted that the foregoing listed embodiments use a base station controller as an example for description, but a terminal or other wireless network elements such as a base station and a core network element may be used.

Persons of ordinary skill in the art may understand that all or a part of the steps of the method embodiments may be implemented by a program instructing relevant hardware. The foregoing program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof as long as such modifications or replacements do not cause the essence of corresponding technical solutions to depart from the scope of the technical solutions of the embodiments of the present invention.

## Claims

1. An admission control method comprising:
receiving (201), by a service control module, a service establishment assignment request, wherein the service establishment assignment request is delivered by a core network element according to a service type after the core network element receives a service request initiated by a terminal and comprising the service type;
**characterized in that** the method further comprises:
if determining that a current service corresponding to the service type is in a congestion backpressure state but preset duration is not exceeded, applying (202) for, by the service control module, a transmission resource from a transmission resource allocating module according to the service establishment assignment request, and interacting with the core network element and a base station to establish a transmission path for the service request of the terminal.

2. The method according to claim 1, further comprising:
if determining that the current service corresponding to the service type is in the congestion backpressure state and the preset duration is exceeded, sending (203), by the service control module, a failure response to the core network element, so that the core network element sends a failure response of the service request to the terminal.

3. The method according to claim 1, wherein if determining that the current service corresponding to the service type is in the congestion backpressure state but the preset duration is not exceeded, notifying, by the service control module while applying for the transmission resource from the transmission resource allocating module, the base station and the terminal that admission of the service request of the terminal at a certain rate is allowed.

4. The method according to claim 1, wherein the determining, by the service control module, that a current service corresponding to the service type is not in a congestion backpressure state, is specifically:
determining, by the service control module, that a congestion backpressure message sent by a user plane transmission resource managing module according to a congestion state of a detected queue corresponding to the service type is not received;
or
determining, by the service control module, that a congestion removal message sent by a user plane transmission resource managing module according to a congestion state of a detected queue corresponding to the service type is received.

5. The method according to claim 1, wherein the determining, by the service control module, that a current service corresponding to the service type is in a congestion backpressure state but preset duration is not exceeded, is specifically:
determining, by the service control module, that a congestion backpressure message sent by a user plane transmission resource managing module according to a congestion state of a detected queue corresponding to the service type is received, and a time period between a time point when the service control module receives the service request and a time point when the congestion backpressure message is received is less than the preset duration.

6. The method according to claim 2, wherein the determining, by the service control module, that the current service corresponding to the service type is in the congestion backpressure state and the preset duration is exceeded, is specifically:
determining, by the service control module after a congestion backpressure message sent by a user plane transmission resource managing module according to a congestion state of a detected queue corresponding to the service type is received, that a time period between a time point when the service control module receives the service request and a time point when the congestion backpressure message is received is greater than or equal to the preset duration; and
a congestion removal message sent by the user plane transmission resource managing module according to the congestion state of the detected queue corresponding to the service type is not received within the preset duration.

7. The method according to any one of claims 4 to 6, wherein the service type is a realtime service type and a queue corresponding to the realtime service type is a realtime queue;
or
the service type is a non-realtime service type and a queue corresponding to the non-realtime service type is a non-realtime queue.

8. A service control module comprising:
a receiving unit (81), configured to receive a service establishment assignment request, wherein the service establishment assignment request is delivered by a core network element according to a service type after the core network element receives a service request initiated by a terminal and comprising the service type;
**characterized in that** the service control module further comprises:
a determining unit (82), configured to determine that a current service corresponding to the service type is in a congestion backpressure state but preset duration is not exceeded; and
a transmission path establishing unit (83), configured to, in response to the determining, apply for a transmission resource from a transmission resource allocating module according to the service establishment assignment request, and interact with the core network element and a base station to establish a transmission path for the service request of the terminal.

9. The service control module according to claim 8, wherein the determining unit is further configured to:
determine that the current service corresponding to the service type is in the congestion backpressure state and the preset duration is exceeded; and
correspondingly, the transmission path establishing unit is further configured to:
send a failure response to the core network element, so that the core network element sends a failure response of the service request to the terminal.

10. The service control module according to claim 8, wherein:
when the determining unit determines that the current service corresponding to the service type is in the congestion backpressure state but the preset duration is not exceeded, the transmission path establishing unit is further configured to notify the base station and the terminal that admission of the service request of the terminal at a certain rate is allowed.

11. The service control module according to claim 8, wherein the determining unit is specifically configured to:
if it is determined that a congestion backpressure message sent by a user plane transmission resource managing module according to a congestion state of a detected queue corresponding to the service type is not received, determine that the current service corresponding to the service type is not in the congestion backpressure state;
or
if it is determined that a congestion removal message sent by a user plane transmission resource managing module according to a congestion state of a detected queue corresponding to the service type is received, determine that the current service corresponding to the service type is not in the congestion backpressure state.

12. The service control module according to claim 8, wherein the determining unit is specifically configured to:
if it is determined that a congestion backpressure message sent by a user plane transmission resource managing module according to a congestion state of a detected queue corresponding to the service type is received, and a time period between a time point when the service control module receives the service request and a time point when the congestion backpressure message is received is less than the preset duration, determine that the current service corresponding to the service type is in the congestion backpressure state but the preset duration is not exceeded.

13. The service control module according to claim 9, wherein the determining unit is specifically configured to:
after it is determined that a congestion backpressure message sent by a user plane transmission resource managing module according to a congestion state of a detected queue corresponding to the service type is received, and if a time period between a time point when the service control module receives the service request and a time point when the congestion backpressure message is received is greater than or equal to the preset duration; and
a congestion removal message sent by the user plane transmission resource managing module according to the congestion state of the detected queue corresponding to the service type is not received within the preset duration, determine that the current service corresponding to the service type is in the congestion backpressure state and the preset duration is exceeded.

14. The service control module according to any one of claims 8 to 13, wherein:
the service type is a realtime service type and a queue corresponding to the realtime service type is a realtime queue;
or
the service type is a non-realtime service type and a queue corresponding to the non-realtime service type is a non-realtime queue.

## Patentansprüche

1. Zulassungskontrollverfahren, umfassend:
Empfangen (201), durch ein Dienststeuerungsmodul, einer Diensteinrichtungszuweisungsanforderung, wobei die Diensteinrichtungszuweisungsanforderung von einem Kernnetzwerkelement gemäß einem Diensttyp bereitgestellt wird, nachdem das Kernnetzwerkelement eine Dienstanforderung empfangen hat, die von einem Endgerät eingeleitet wird und welche den Diensttyp umfasst;
**dadurch gekennzeichnet, dass** das Verfahren ferner umfasst:
wenn bestimmt wird, dass ein aktueller dem Diensttyp entsprechender Dienst sich in einem Überlastungs-Gegendruckzustand befindet, aber die voreingestellte Dauer nicht überschritten ist, Beantragen (202), durch das Dienststeuerungsmodul, einer Übertragungsressource von einem Übertragungsressourcenzuteilungsmodul gemäß der Diensteinrichtungszuweisungsanforderung, und Zusammenwirken mit dem Kernnetzwerkelement und einer Basisstation, um einen Übertragungspfad für die Dienstanforderung des Endgeräts einzurichten.

2. Verfahren nach Anspruch 1, ferner umfassend:
wenn bestimmt wird, dass der aktuelle dem Diensttyp entsprechende Dienst sich in dem Überlastungs-Gegendruckzustand befindet und die voreingestellte Dauer überschritten ist, Senden (203), durch das Dienststeuerungsmodul, einer Fehlerantwort an das Kernnetzwerkelement, sodass das Kernnetzwerkelement eine Fehlerantwort der Dienstanforderung an das Endgerät sendet.

3. Verfahren nach Anspruch 1, wobei, wenn bestimmt wird, dass der aktuelle dem Diensttyp entsprechende Dienst sich in dem Überlastungs-Gegendruckzustand befindet, aber die voreingestellte Dauer nicht überschritten ist, das Benachrichtigen, durch das Dienststeuerungsmodul während die Übertragungsressource von dem Übertragungsressourcenzuteilungsmodul beantragt wird, der Basisstation und des Endgeräts, dass die Zulassung der Dienstanforderung des Endgerätes mit einer bestimmten Rate erlaubt ist.

4. Verfahren nach Anspruch 1, wobei das Bestimmen, durch das Dienststeuerungsmodul, dass ein aktueller dem Diensttyp entsprechender Dienst sich nicht in einem Überlastungs-Gegendruckzustand befindet, insbesondere beinhaltet:
Bestimmen, durch das Dienststeuerungsmodul, dass eine Überlastungs-Gegendrucknachricht, die von einem Benutzerebenen-Übertragungsressourcenverwaltungsmodul gemäß einem Überlastungszustand einer erkannten dem Diensttyp entsprechenden Warteschlange gesendet wird, nicht empfangen wird; oder
Bestimmen, durch das Dienststeuerungsmodul, dass eine Überlastungs-Entfernungsnachricht, die von einem Benutzerebenen-Übertragungsressourcenverwaltungsmodul gemäß einem Überlastungszustand einer erkannten dem Diensttyp entsprechenden Warteschlange gesendet wird, empfangen wird.

5. Verfahren nach Anspruch 1, wobei das Bestimmen, durch das Dienststeuerungsmodul, dass ein aktueller dem Diensttyp entsprechender Dienst sich in einem Überlastungs-Gegendruckzustand befindet, aber die voreingestellte Dauer nicht überschritten ist, insbesondere beinhaltet:
Bestimmen, durch das Dienststeuerungsmodul, dass eine Überlastungs-Gegendrucknachricht, die von einem Benutzerebenen-Übertragungsressourcenverwaltungsmodul gemäß einem Überlastungszustand einer erkannten dem Diensttyp entsprechenden Warteschlange gesendet wird, empfangen wird, und ein Zeitraum zwischen einem Zeitpunkt, zu dem das Dienststeuerungsmodul die Dienstanforderung empfängt, und einem Zeitpunkt, zu dem die Überlastungs-Gegendrucknachricht empfangen wird, kleiner als die voreingestellte Dauer ist.

6. Verfahren nach Anspruch 2, wobei das Bestimmen, durch das Dienststeuerungsmodul, dass der aktuelle dem Diensttyp entsprechende Dienst sich in dem Überlastungs-Gegendruckzustand befindet und die voreingestellte Dauer überschritten ist, insbesondere umfasst:
Bestimmen, durch das Dienststeuerungsmodul, nachdem eine Überlastungs-Gegendrucknachricht, die von einem Benutzerebenen-Übertragungsressourcenverwaltungsmodul gemäß einem Überlastungszustand einer erkannten dem Diensttyp entsprechenden Warteschlange gesendet wird, empfangen wird, dass ein Zeitraum zwischen einem Zeitpunkt, zu dem das Dienststeuerungsmodul die Dienstanforderung empfängt, und einem Zeitpunkt, zu dem die Überlastungs-Gegendrucknachricht empfangen wird, größer als oder gleich der voreingestellten Dauer ist; und
eine Überlastungs-Entfernungsnachricht, die von dem Benutzerebenen-Übertragungsressourcenverwaltungsmodul gemäß dem Überlastungszustand der erkannten dem Diensttyp entsprechenden Warteschlange gesendet wird, nicht innerhalb der voreingestellten Dauer empfangen wird.

7. Verfahren nach einem der Ansprüche 4 bis 6, wobei der Diensttyp ein Echtzeitdiensttyp ist und eine dem Echtzeitdiensttyp entsprechende Warteschlange eine Echtzeitwarteschlange ist; oder
der Diensttyp ein Nicht-Echtzeitdiensttyp ist und eine dem Nicht-Echtzeitdiensttyp entsprechende Warteschlange eine Nicht-Echtzeitwarteschlange ist.

8. Dienststeuerungsmodul, umfassend:
eine Empfangseinheit (81), die konfiguriert ist, um eine Diensteinrichtungszuweisungsanforderung zu empfangen, wobei die Diensteinrichtungszuweisungsanforderung von einem Kernnetzwerkelement gemäß einem Diensttyp bereitgestellt wird, nachdem das Kernnetzwerkelement eine Dienstanforderung empfangen hat, die von einem Endgerät eingeleitet wird und welche den Diensttyp umfasst;
**dadurch gekennzeichnet, dass** das Dienststeuerungsmodul ferner umfasst:
eine Bestimmungseinheit (82), die konfiguriert ist, um zu bestimmen, dass ein aktueller dem Diensttyp entsprechender Dienst sich in einem Überlastungs-Gegendruckzustand befindet, aber die voreingestellte Dauer nicht überschritten ist; und
eine Übertragungspfadeinrichtungseinheit (83), die konfiguriert ist, um in Reaktion auf das Bestimmen eine Übertragungsressource von einem Übertragungsressourcenzuteilungsmodul gemäß der Diensteinrichtungszuweisungsanforderung zu beantragen und mit dem Kernnetzwerkelement und einer Basisstation zusammenzuwirken, um einen Übertragungspfad für die Dienstanforderung des Endgerätes einzurichten.

9. Dienststeuerungsmodul nach Anspruch 8, wobei die Bestimmungseinheit ferner konfiguriert ist, um:
zu bestimmen, dass der aktuelle dem Diensttyp entsprechende Dienst sich in dem Überlastungs-Gegendruckzustand befindet und die voreingestellte Dauer überschritten ist; und
die Übertragungspfadeinrichtungseinheit entsprechend ferner konfiguriert ist, um:
eine Fehlerantwort an das Kernnetzwerkelement zu senden, sodass das Kernnetzwerkelement eine Fehlerantwort der Dienstanforderung an das Endgerät sendet.

10. Dienststeuerungsmodul nach Anspruch 8, wobei:
wenn die Bestimmungseinheit bestimmt, dass der aktuelle dem Diensttyp entsprechende Dienst sich in dem Überlastungs-Gegendruckzustand befindet, aber die voreingestellte Dauer nicht überschritten ist, die Übertragungspfadeinrichtungseinheit ferner konfiguriert ist, um die Basisstation und das Endgerät zu benachrichtigen, dass die Zulassung der Dienstanforderung des Endgeräts mit einer bestimmten Rate erlaubt ist.

11. Dienststeuerungsmodul nach Anspruch 8, wobei die Bestimmungseinheit insbesondere konfiguriert ist, um:
wenn bestimmt wird, dass eine Überlastungs-Gegendrucknachricht, die von einem Benutzerebenen-Übertragungsressourcenverwaltungsmodul gemäß einem Überlastungszustand einer erkannten dem Diensttyp entsprechenden Warteschlange gesendet wird, nicht empfangen wird, zu bestimmen, dass der aktuelle dem Diensttyp entsprechende Dienst sich nicht in dem Überlastungs-Gegendruckzustand befindet; oder
wenn bestimmt wird, dass eine Überlastungs-Entfernungsnachricht, die von einem Benutzerebenen-Übertragungsressourcenverwaltungsmodul gemäß einem Überlastungszustand einer erkannten dem Diensttyp entsprechenden Warteschlange gesendet wird, empfangen wird, zu bestimmen, dass der aktuelle dem Diensttyp entsprechende Dienst sich nicht in dem Überlastungs-Gegendruckzustand befindet.

12. Dienststeuerungsmodul nach Anspruch 8, wobei die Bestimmungseinheit insbesondere konfiguriert ist, um:
wenn bestimmt wird, dass eine Überlastungs-Gegendrucknachricht, die von einem Benutzerebenen-Übertragungsressourcenverwaltungsmodul gemäß einem Überlastungszustand einer erkannten dem Diensttyp entsprechenden Warteschlange gesendet wird, empfangen wird, und ein Zeitraum zwischen einem Zeitpunkt, zu dem das Dienststeuerungsmodul die Dienstanforderung empfängt, und einem Zeitpunkt, zu dem die Überlastungs-Gegendrucknachricht empfangen wird, kleiner als die voreingestellte Dauer ist,
zu bestimmen, dass der aktuelle dem Diensttyp entsprechende Dienst sich in dem Überlastungs-Gegendruckzustand befindet, aber die voreingestellte Dauer nicht überschritten wird.

13. Dienststeuerungsmodul nach Anspruch 9, wobei die Bestimmungseinheit insbesondere konfiguriert ist, um:
nachdem bestimmt worden ist, dass eine Überlastungs-Gegendrucknachricht, die von einem Benutzerebenen-Übertragungsressourcenverwaltungsmodul gemäß einem Überlastungszustand einer erkannten dem Diensttyp entsprechenden Warteschlange gesendet wird, empfangen wird, und wenn ein Zeitraum zwischen einem Zeitpunkt, zu dem das Dienststeuerungsmodul die Dienstanforderung empfängt, und einem Zeitpunkt, zu dem die Überlastungs-Gegendrucknachricht empfangen wird, größer als oder gleich der voreingestellten Dauer ist; und
eine Überlastungs-Entfernungsnachricht, die von dem Benutzerebenen-Übertragungsressourcenverwaltungsmodul gemäß dem Überlastungszustand der erkannten dem Diensttyp entsprechenden Warteschlange gesendet wird, nicht innerhalb der voreingestellten Dauer empfangen wird, zu bestimmen, dass der aktuelle dem Diensttyp entsprechende Dienst sich in dem Überlastungs-Gegendruckzustand befindet und die voreingestellte Dauer überschritten ist.

14. Dienststeuerungsmodul nach einem der Ansprüche 8 bis 13, wobei:
der Diensttyp ein Echtzeitdiensttyp ist und eine dem Echtzeitdiensttyp entsprechende Warteschlange eine Echtzeitwarteschlange ist; oder
der Diensttyp ein Nicht-Echtzeitdiensttyp ist und eine dem Nicht-Echtzeitdiensttyp entsprechende Warteschlange eine Nicht-Echtzeitwarteschlange ist.

## Revendications

1. Procédé de commande d'admission, comprenant l'opération consistant à :
recevoir (201), par un module de commande de service, une demande d'attribution d'établissement de service, la demande d'attribution d'établissement de service étant fournie par un élément de réseau central d'après un type de service après que l'élément de réseau central a reçu une demande de service lancée par un terminal et contenant le type de service ;
le procédé étant **caractérisé en ce qu'**il comprend également les opérations consistant à :
s'il est déterminé qu'un service courant correspondant au type de service est dans un état de pression de retour de congestion mais qu'une durée prédéfinie n'est pas écoulée, demander (202), par le module de commande de service, une ressource d'émission à un module d'attribution de ressource d'émission selon la demande d'attribution d'établissement de service, et interagir avec l'élément de réseau central et une station de base pour établir un trajet d'émission pour la demande de service du terminal.

2. Procédé selon la revendication 1, comprenant également l'opération consistant à :
s'il est déterminé que le service courant correspondant au type de service est dans l'état de pression de retour de congestion et que la durée prédéfinie est écoulée, envoyer (203), par le module de commande de service, une réponse d'échec à l'élément de réseau central, afin que l'élément de réseau central envoie une réponse d'échec de la demande de service au terminal.

3. Procédé selon la revendication 1, dans lequel, s'il est déterminé que le service courant correspondant au type de service est dans l'état de pression de retour de congestion mais que la durée prédéfinie n'est pas écoulée, informer, par le module de commande de service pendant qu'il demande la ressource d'émission au module d'attribution de ressource d'émission, la station de base et le terminal que l'admission de la demande de service du terminal à un certain débit est autorisée.

4. Procédé selon la revendication 1, dans lequel la détermination, par le module de commande de service, du fait qu'un service courant correspondant au type de service n'est pas dans un état de pression de retour de congestion, consiste spécifiquement à :
déterminer, par le module de commande de service, qu'aucun message de pression de retour de congestion envoyé par un module de gestion de ressource d'émission de plan d'utilisateur d'après un état de congestion d'une file d'attente détectée correspondant au type de service n'a été reçu ;
ou
déterminer, par le module de commande de service, qu'un message d'élimination de congestion envoyé par un module de gestion de ressource d'émission de plan d'utilisateur d'après un état de congestion d'une file d'attente détectée correspondant au type de service a été reçu.

5. Procédé selon la revendication 1, dans lequel la détermination, par le module de commande de service, du fait qu'un service courant correspondant au type de service est dans un état de pression de retour de congestion mais que la durée prédéfinie n'est pas écoulée, consiste spécifiquement à :
déterminer, par le module de commande de service, qu'un message de pression de retour de congestion envoyé par un module de gestion de ressource d'émission de plan d'utilisateur d'après un état de congestion d'une file d'attente détectée correspondant au type de service a été reçu, et qu'une période de temps écoulée entre un instant où le module de commande de service reçoit la demande de service et un instant où le message de pression de retour de congestion est reçu est inférieure à la durée prédéfinie.

6. Procédé selon la revendication 2, dans lequel la détermination, par le module de commande de service, du fait que le service courant correspondant au type de service est dans l'état de pression de retour de congestion et que la durée prédéfinie est écoulée, consiste spécifiquement à :
déterminer, par le module de commande de service, après qu'un message de pression de retour de congestion envoyé par un module de gestion de ressource d'émission de plan d'utilisateur d'après un état de congestion d'une file d'attente détectée correspondant au type de service a été reçu, qu'une période de temps écoulée entre un instant où le module de commande de service reçoit la demande de service et un instant où le message de pression de retour de congestion est reçu est supérieure ou égale à la durée prédéfinie ; et
qu'aucun message d'élimination de congestion envoyé par le module de gestion de ressource d'émission de plan d'utilisateur d'après l'état de congestion de la file d'attente détectée correspondant au type de service n'a été reçu pendant la durée prédéfinie.

7. Procédé selon l'une quelconque des revendications 4 à 6, dans lequel le type de service est un type de service en temps réel et une file d'attente correspondant au type de service en temps réel est une file d'attente en temps réel ;
ou
le type de service est un type de service en temps non réel et une file d'attente correspondant au type de service en temps non réel est une file d'attente en temps non réel.

8. Module de commande de service, comprenant :
une unité de réception (81), conçue pour recevoir une demande d'attribution d'établissement de service, la demande d'attribution d'établissement de service étant fournie par un élément de réseau central d'après un type de service après que l'élément de réseau central a reçu une demande de service lancée par un terminal et contenant le type de service ;
**caractérisé en ce que** le module de commande de service comprend également :
une unité de détermination (82), conçue pour déterminer qu'un service courant correspondant au type de service est dans un état de pression de retour de congestion mais qu'une durée prédéfinie n'est pas écoulée ; et
une unité d'établissement de trajet d'émission (83), conçue pour, en réponse à la détermination, demander une ressource d'émission à un module d'attribution de ressource d'émission selon la demande d'attribution d'établissement de service, et interagir avec l'élément de réseau central et une station de base pour établir un trajet d'émission pour la demande de service du terminal.

9. Module de commande de service selon la revendication 8, dans lequel l'unité de détermination est également conçue pour :
déterminer que le service courant correspondant au type de service est dans l'état de pression de retour de congestion et que la durée prédéfinie est écoulée ; et
de manière correspondante, l'unité d'établissement de trajet d'émission est également conçue pour :
envoyer une réponse d'échec à l'élément de réseau central, afin que l'élément de réseau central envoie une réponse d'échec de la demande de service au terminal.

10. Module de commande de service selon la revendication 8, dans lequel :
lorsque l'unité de détermination détermine que le service courant correspondant au type de service est dans l'état de pression de retour de congestion mais que la durée prédéfinie n'est pas écoulée, l'unité d'établissement de trajet d'émission est également conçue pour informer la station de base et le terminal que l'admission de la demande de service du terminal à un certain débit est autorisée.

11. Module de commande de service selon la revendication 8, dans lequel l'unité de détermination est spécifiquement conçue pour :
s'il est déterminé qu'aucun message de pression de retour de congestion envoyé par un module de gestion de ressource d'émission de plan d'utilisateur d'après un état de congestion d'une file d'attente détectée correspondant au type de service n'a été reçu, déterminer que le service courant correspondant au type de service n'est pas dans l'état de pression de retour de congestion ;
ou
s'il est déterminé qu'un message d'élimination de congestion envoyé par un module de gestion de ressource d'émission de plan d'utilisateur d'après un état de congestion d'une file d'attente détectée correspondant au type de service a été reçu, déterminer que le service courant correspondant au type de service n'est pas dans l'état de pression de retour de congestion.

12. Module de commande de service selon la revendication 8, dans lequel l'unité de détermination est spécifiquement conçue pour :
s'il est déterminé qu'un message de pression de retour de congestion envoyé par un module de gestion de ressource d'émission de plan d'utilisateur d'après un état de congestion d'une file d'attente détectée correspondant au type de service a été reçu, et qu'une période de temps écoulée entre un instant où le module de commande de service reçoit la demande de service et un instant où le message de pression de retour de congestion est reçu est inférieure à la durée prédéfinie, déterminer que le service courant correspondant au type de service est dans l'état de pression de retour de congestion, mais que la durée prédéfinie n'est pas écoulée.

13. Module de commande de service selon la revendication 9, dans lequel l'unité de détermination est spécifiquement conçue pour :
après qu'il a été déterminé qu'un message de pression de retour de congestion envoyé par un module de gestion de ressource d'émission de plan d'utilisateur d'après un état de congestion d'une file d'attente détectée correspondant au type de service a été reçu, et si une période de temps écoulée entre un instant où le module de commande de service reçoit la demande de service et un instant où le message de pression de retour de congestion est reçu est supérieure ou égale à la durée prédéfinie ; et
si aucun message d'élimination de congestion envoyé par le module de gestion de ressource d'émission de plan d'utilisateur d'après l'état de congestion de la file d'attente détectée correspondant au type de service n'a été reçu pendant la durée prédéfinie, déterminer que le service courant correspondant au type de service est dans l'état de pression de retour de congestion et que la durée prédéfinie est écoulée.

14. Module de commande de service selon l'une quelconque des revendications 8 à 13, dans lequel :
le type de service est un type de service en temps réel et une file d'attente correspondant au type de service en temps réel est une file d'attente en temps réel ;
ou
le type de service est un type de service en temps non réel et une file d'attente correspondant au type de service en temps non réel est une file d'attente en temps non réel.
